# EUROPEAN PATENT SPECIFICATION

(11) **EP 3 468 286 B1**
(45) Date of publication and mention of the grant of the patent: **01.01.2025**
(21) Application number: 16903751.2
(22) Date of filing: 18.08.2016
(51) Int. Cl.: H04L 12/66, H04L 12/18, H04W 76/40

(54) **METHOD, DEVICE AND SYSTEM FOR DATA TRANSMISSION, PHYSICAL RESIDENTIAL GATEWAY AND ACCESS NODE**
VERFAHREN, VORRICHTUNG UND SYSTEM ZUR DATENÜBERTRAGUNG, PHYSIKALISCHER RESIDENTIAL-GATEWAY UND ZUGANGSKNOTEN
PROCÉDÉ, DISPOSITIF ET SYSTÈME DE TRANSMISSION DE DONNÉES, PASSERELLE RÉSIDENTIELLE PHYSIQUE ET NOEUD D'ACCÈS

(30) Priority: 03.06.2016 CN 201610396765
(43) Date of publication of application: 10.04.2019
(73) Proprietor: ZTE Corporation, Shenzhen, Guangdong 518057 (CN)
(72) Inventor: YUAN, Liquan, Shenzhen, Guangdong 518057 (CN); ZHANG, Weiliang, Shenzhen, Guangdong 518057 (CN); ZHANG, Dezhi, Shenzhen, Guangdong 518057 (CN)
(74) Representative: Canzler & Bergmeier Patentanwälte Partnerschaft mbB
(86) International application number: PCT/CN2016/095864
(87) International publication number: WO 2017/206369

(56) References cited:
- EP-A1- 2 983 333
- CN-A- 102 611 606
- CN-A- 103 067 268
- CN-A- 103 858 387
- CN-A- 103 999 427
- "Network Functions Virtualisation; Part 1: Infrastructure Architecture; Sub-part 9: Illustrative Use Cases ;GS NFV INF.09", ETSI DRAFT; GS NFV INF.09, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ISG - NFV, no. V0.1.6, 15 June 2013 (2013-06-15), pages 1 - 33, XP014200238
- TIAGO CRUZ ET AL: "An architecture for virtualized home gateways", INTEGRATED NETWORK MANAGEMENT (IM 2013), 2013 IFIP/IEEE INTERNATIONAL SYMPOSIUM ON, IEEE, 27 May 2013 (2013-05-27), pages 520 - 526, XP032445670, ISBN: 978-1-4673-5229-1
- VINCENT CATROS FRANCE TÉLÉCOM-ORANGE FRANCE: "CloudBox - An SDN based Virtual Residential Gat", ITU-T DRAFT ; STUDY PERIOD 2009-2012,20121112INTERNATION, INTERNATIONAL TELECOMMUNICATION UNION, GENEVA ; CH, vol. 21/13, 12 November 2012 (2012-11-12), pages 1 - 5, XP017577409

## Description

### TECHNICAL FIELD

The present invention relates to, but is not limited to, the field of communications and, in particular, relates to a method, device and system for data transmission, a physical residential gateway and an access node.

### BACKGROUND

A residential gateway (RG) is a main device for broadband access of a residential internal network to an external network. The gateway has increasing functions such as a function for supporting the Internet of Things (IoT) and a function for supporting a more flexible home device discovery. However, a residential gateway, which has been deployed previously by an operator cannot support these new functions through software upgrade due to a limited processing capability of the gateway. The process of the operator updating the residential gateway to support new business requires replace time and more resources.

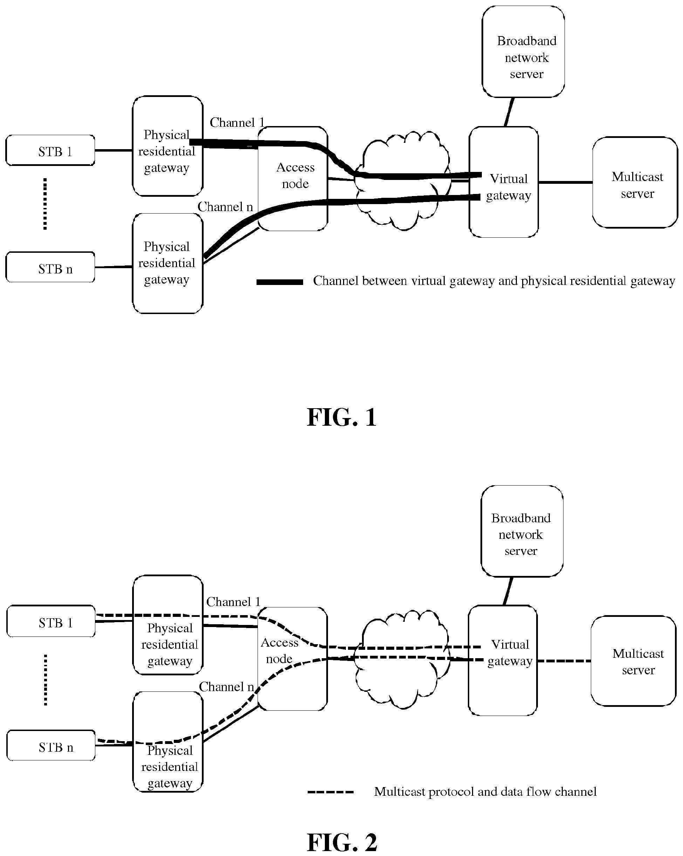

To avoid replacing the gateway, more complex functions can be implemented on the network side, including virtualizing some functions of the gateway. On the network side, the functions for multiple users are implemented on a single physical device, on which virtualized functions of the residential gateway are implemented to form a virtual residential gateway. The virtual residential gateway, together with a physical residential gateway inside the house, constitutes a complete gateway. As shown in FIG. 1, a connection channel is established between each physical residential gateway inside the house and the virtual residential gateway to bear related data. Set top boxes (STBs) 1 to n are connected to respective physical residential gateways, and each physical residential gateway is connected to the virtual residential gateway through a channel with a channel identifier selected from 1 to n. The channel identifier may be determined according to the technology for establishing the channel. For example, when a virtual extensible Local Area Network (VXLAN) is used for establishing a connection, the channel identifier may be obtained from VXLAN information so that the physical residential gateway inside the house and the virtual residential gateway may be connected through the network. The channel starts from the physical residential gateway, passes devices such as an access node and a sink node, and ends to the virtual residential gateway past. Each user has a separate channel.

Both the original physical residential gateway and the virtual residential gateway need to support original functions such as Internet surfing and video display. For the video service, the multicast technique is widely applied to reduce bandwidth consumption. If a multicast service is transmitted through a bearing channel between the physical residential gateway inside the house and the virtual residential gateway, as shown in FIG. 2, multicast data and a multicast protocol both are transmitted through a multicast protocol and data flow channel, and the virtual residential gateway generates a table of multicast members according to the multicast protocol, receives the multicast data from a multicast server and replicates and transmits the multicast data to the physical residential gateway through the multicast protocol and data flow channels 1 to n. The multicast service becomes a unicast service for devices on the bearing channel between the physical residential gateway and the virtual residential gateway, putting tremendous bandwidth pressure on a network.

The document VINCENT CATROS FRANCE TELECOM-ORANGE FRANCE: "CloudBox - An SDN based Virtual Residential Gat", ITU-T DRAFT ; STUDY PERIOD 2009-2012,20121112INTERNATION, INTERNATIONAL TELECOMMUNICATION UNION, GENEVA ; CH, vol. 21/13, 12 November 2012 (2012-11-12), pages 1-5 discloses to split forwarding plane from control plane.

No effective solution has yet been proposed for the above problem.

### SUMMARY

The following is a summary of the subject matter described herein in detail. This summary is not intended to limit the scope of the claims.

The invention is set out in the appended set of claims.

Other aspects can be understood after the drawings and detailed description are read and understood

### BRIEF DESCRIPTION OF DRAWINGS

FIG. 1 is a schematic diagram of channels between a virtual residential gateway and physical residential gateways in the existing art;
FIG. 2 is a schematic diagram of multicast protocol and data flow channels between the virtual residential gateway and the physical residential gateways in the existing art;
FIG. 3 is a flowchart 1 of a method for data transmission according to the present invention;
FIG. 4 is a flowchart 2 of a method for data transmission according to the present invention;
FIG. 5 is a schematic diagram of multicast data channels and multicast protocol channels according to the present invention;
FIG. 6 is a flowchart 1 illustrating a process for multicast data forwarding and configuration according to the present invention;
FIG. 7 is a flowchart 2 illustrating a process for multicast data forwarding and configuration according to the present invention;
FIG. 8 is a block diagram of a first device for data transmission according to the present invention;
FIG. 9 is a block diagram of a physical residential gateway according to the present invention;
FIG. 10 is a block diagram of a second device for data transmission according to the present invention; and
FIG. 11 is a block diagram of an access node according to the present invention.

### DETAILED DESCRIPTION

Implementations of the present application will be described below in detail with reference to the accompanying drawings. It is to be noted that if not in collision, the implementations and features therein in the present application may be combined with each other.

It is to be noted that the terms "first", "second" and the like in the description, claims and drawings of the present invention are used to distinguish between similar objects and are not necessarily used to describe a particular order or sequence.

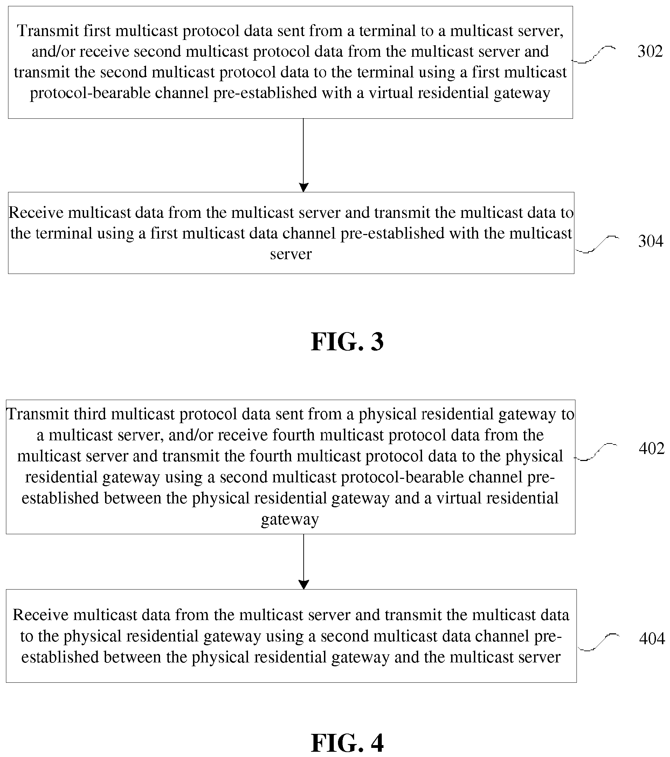

The present invention provides a method for data transmission. FIG. 3 is a flowchart 1 of a method for data transmission according to the present invention. As shown in FIG. 3, the method includes steps described below.

In step 302, first multicast protocol data sent from a terminal is transmitted to a multicast server, and/or second multicast protocol data is received from the multicast server and transmitted to the terminal using a first multicast protocol-bearable channel pre-established with a virtual residential gateway.

In step 304, multicast data is received from the multicast server and transmitted to the terminal using a first multicast data channel pre-established with the multicast server. The first multicast protocol-bearable channel and the first multicast data channel are independent of each other.

The above operations may be performed by a physical residential gateway and the above first multicast protocol-bearable channel may be a channel with a capability of bearing a multicast protocol (which may be referred to as a multicast protocol channel). Step 302 and step 304 may be executed in a reverse order.

In the above steps, because a channel for transmitting the multicast protocol data and a channel for transmitting the multicast data are independent channels, it may be avoided that the multicast protocol data and the multicast data are transmitted on a same channel and bandwidth pressure on a network is thus reduced, thereby resolving the problem in the existing art of large bandwidth pressure on the network and achieving an effect of reducing the bandwidth pressure on the network.

In an implementation, the step in which the multicast data is received from the multicast server using the first multicast data channel pre-established with the multicast server includes the step described below.

The multicast data sent from the multicast server and forwarded by an access node according to a first multicast control list is received using the pre-established first multicast data channel. The first multicast data channel connects the physical residential gateway and the multicast server through the access node. In this implementation, a corresponding first multicast data channel is established between each physical residential gateway and the multicast server, and each multicast data channel passes through an intermediate node (which includes the above access node and may also include a sink node in an upstream of the access node).

In an implementation, the step in which the multicast data is transmitted to the terminal includes: a configured second multicast control list is determined and the multicast data is transmitted to the terminal according to the second multicast control list. In this implementation, the second multicast control list may include a multicast member control list and a forwarding replication list. The multicast member control list may be used for indicating authorized multicast members (i.e., the terminals with a multicast permission, e.g., set-top boxes). The forwarding replication list may be used for indicating replication information of the multicast data, i.e., the needed number of copies of the multicast data. It is to be noted that the terminal with the multicast permission may change and a multicast program requested to play by the terminal with the multicast permission may also change; accordingly, the number of copies of the multicast data may also change. Therefore, the above second multicast control list may be updated in real time according to changes of the terminal.

In an implementation, the second multicast control list includes at least one of: the second multicast control list configured by a configuration server according to multicast permission information and an on-demand situation; the second multicast control list configured by the virtual residential gateway according to the multicast permission information and the on-demand situation; and the second multicast control list which is determined by the virtual residential gateway according to the multicast permission information and the on-demand situation and transmitted to the configuration server and then is configured by the configuration server. The multicast permission information is set to indicate an on-demand permission for a multicast program of at least two terminals, and the on-demand situation is set to indicate an on-demand situation of the multicast program of the at least two terminals. In this implementation, the second multicast control list may be configured by the configuration server, may be configured by the virtual residential gateway, or may be configured by the configuration server and the virtual residential gateway together. In practical applications, the second multicast control list may also be configured in any other reasonable manners.

In an implementation, the step in which the multicast data is transmitted to the terminal according to the second multicast control list includes: the multicast data is replicated according to the second multicast control list and the replicated multicast data is transmitted to the terminal. In this implementation, the multicast member control list included in the second multicast control list may be used for determining authorized terminals, i.e., the terminals with an on-demand permission of a multicast program and the forwarding replication list included in the second multicast control list may be used for determining the number of copies of the multicast data to be replicated. After the multicast data is replicated, the replicated multicast data may be transmitted to the terminals which request to play the multicast program.

It is known from the above implementations that the second multicast control list may be updated in real time according to the changes of the terminal. The following is an example in which the second multicast control list is updated: the second multicast control list is updated according to a first update instruction sent from the virtual residential gateway and/or the configuration server. In this example, the virtual residential gateway may receive requests for the multicast program from different terminals; the virtual residential gateway may determine whether the second multicast control list in the physical residential gateway needs to be updated or transmit the requests for the multicast program from different terminals to the configuration server to enable the configuration server to determine whether the second multicast control list in the physical residential gateway needs to be updated; and the virtual residential gateway and/or the configuration server instruct the physical residential gateway to update the second multicast control list when it is determined that the second multicast control list needs to be updated. The determining principle may be determining, according to an existing forwarding replication list of the multicast program, whether another terminal other than the terminal which requests to play the multicast program under the physical residential gateway has requested the multicast program. When it is determined that another terminal has requested the multicast program, merely the forwarding replication list included in the second multicast control list of the physical residential gateway is updated. It is to be noted that when it is determined that other terminals have not requested the multicast program, a multicast control list in an upstream node of the physical residential gateway needs to be updated.

In an implementation, the above multicast protocol-bearable channel may include a two-layer channel based on a media access control (MAC) layer and a three-layer channel based on an interconnection protocol (IP) layer between Internet networks. The present invention further provides a computer storage medium, which is configured to store computer-executable instructions for executing the above method for data transmission.

The present invention provides a method for data transmission. FIG. 4 is a flowchart 2 of a method for data transmission according to the present invention. As shown in FIG. 4, the method includes steps described below.

In step 402, third multicast protocol data sent from a physical residential gateway is transmitted to a multicast server, and/or fourth multicast protocol data is received from the multicast server and transmitted to the physical residential gateway using a second multicast protocol-bearable channel pre-established between the physical residential gateway and a virtual residential gateway.

In step 404, multicast data is received from the multicast server and transmitted to the physical residential gateway using a second multicast data channel pre-established between the physical residential gateway and the multicast server. The second multicast protocol-bearable channel and the second multicast data channel are independent of each other.

The above operations may be performed by an access node. Step 402 and step 404 may be executed in a reverse order.

In the above steps, because a channel for transmitting the multicast protocol data (the third multicast protocol data and the fourth multicast protocol data) and a channel for transmitting the multicast data are independent channels, it may be avoided that the multicast protocol data and the multicast data are transmitted on a same channel and bandwidth pressure on a network is reduced, thereby resolving the problem in the existing art of large bandwidth pressure on the network and achieving an effect of reducing the bandwidth pressure on the network.

In an implementation, the step in which the multicast data is transmitted to the physical residential gateway includes: a configured first multicast control list is determined and the multicast data is transmitted to the physical residential gateway according to the first multicast control list. In this implementation, the first multicast control list may include a multicast member control list and a forwarding replication list. The multicast member control list may be used for indicating authorized multicast members (i.e., the terminals with a multicast permission, e.g., set-top boxes). The forwarding replication list may be used for indicating replication information of the multicast data, i.e., the needed number of copies of the multicast data. It is to be noted that the terminal with the multicast permission may change and a multicast program requested to play by the terminal with the multicast permission may also change; accordingly, the number of copies of the multicast data may also change. Therefore, the above first multicast control list may be updated in real time according to changes of the terminal.

In an implementation, the first multicast control list includes at least one of: the first multicast control list configured by a configuration server according to a network connection situation between the multicast server and the physical residential gateway; the first multicast control list configured by the virtual residential gateway according to the network connection situation between the multicast server and the physical residential gateway; and the first multicast control list which is determined by the virtual residential gateway according to the network connection situation between the multicast server and the physical residential gateway and transmitted to the configuration server and then is configured by the configuration server. In this implementation, the first multicast control list may be configured by the configuration server, may be configured by the virtual residential gateway, or may be configured by the configuration server and the virtual residential gateway together. In practical applications, the first multicast control list may also be configured in any other reasonable manners.

In an implementation, the step in which the multicast data is transmitted to the physical residential gateway according to the first multicast control list includes: the multicast data is replicated according to the first multicast control list and the replicated multicast data is transmitted to the physical residential gateway. In this implementation, the multicast member control list included in the first multicast control list may be used for determining authorized terminals, i.e., the terminals with an on-demand permission of a multicast program and the forwarding replication list included in the first multicast control list may be used for determining the number of copies of the multicast data to be replicated. After the multicast data is replicated, the replicated multicast data may be transmitted to the physical residential gateway and the physical residential gateway may transmit the multicast data to a terminal connected to the physical residential gateway according to a second multicast control list in the physical residential gateway.

In an implementation, the first multicast control list may be updated in real time according to the changes of the terminal. The following is an example in which the first multicast control list is updated: the first multicast control list is updated according to a second update instruction sent from the virtual residential gateway and/or the configuration server. In this implementation, the virtual residential gateway may receive requests for the multicast program from different terminals; the virtual residential gateway may determine whether the first multicast control list in the access node needs to be updated or transmit the requests for the multicast program from different terminals to the configuration server to enable the configuration server to determine whether the first multicast control list in the access node needs to be updated; and the virtual residential gateway and/or the configuration server instruct the physical residential gateway to update the first multicast control list when it is determined that the first multicast control list needs to be updated. The determining principle may be determining, according to an existing forwarding replication list of the multicast program, whether another physical residential gateway other than the physical residential gateway which requests to play the multicast program under the access node has requested the multicast program. When it is determined that another physical residential gateway has requested the multicast program, merely the forwarding replication list included in the first multicast control list of the access node is updated. It is to be noted that when it is determined that other physical residential gateways have not requested the multicast program, a multicast control list in an upstream node of the access node needs to be updated.

In an implementation, the second multicast protocol-bearable channel includes a two-layer channel based on a media access control (MAC) layer, a three-layer channel based on an Internet IP layer and a combination thereof. The second multicast protocol-bearable channel may include at least one of the two-layer channel based on the MAC layer and the three-layer channel based on the Internet IP layer.

The present invention will be described in detail in conjunction with the implementations below.

The present invention provides a control method for multicasting and forwarding by the virtual residential gateway. In the method, a data bearing channel (corresponding to the above multicast protocol-bearable channel) is established between the physical residential gateway and the virtual residential gateway; and a multicast protocol packet (i.e., multicast protocol data) sent from a device (such as the set-top box) connected to the physical residential gateway is transmitted to the virtual residential gateway through the data bearing channel.

The virtual residential gateway exchanges related information to the multicast member control list with the configuration server and the configuration server configures a multicast control list for a device on a multicast data forwarding path according to identification information (the multicast control list configured for the physical residential gateway corresponds to the second multicast control list and the multicast control list configured for the access node corresponds to the first multicast control list).

Alternatively, the virtual residential gateway configures the multicast member control list of the physical residential gateway and the virtual residential gateway configures the multicast control list for the physical residential gateway. Alternatively, the virtual residential gateway transmits the multicast control list to the configuration server and the configuration server configures the corresponding multicast member control list for the physical residential gateway.

The above data bearing channel may be the two-layer channel based on the MAC layer or the three-layer channel based on the IP layer, simultaneously bearing data traffic and multicast protocols.

The data bearing channel (corresponding to the second multicast protocol-bearable channel) established between the physical residential gateway and the virtual residential gateway may be different from (independent of) the multicast data forwarding path (corresponding to the second multicast data channel). The multicast data is not carried in the data bearing channel established between the physical residential gateway and the virtual residential gateway, and the multicast data may be replicated from the multicast server to the access node and further replicated from the access node to the physical residential gateway through the multicast data channel.

The configuration server may configure, with a control protocol, the multicast control list of the device (such as the access node) on the forwarding path for the device on the forwarding path. The control protocol includes one or more of a Simple Network Management Protocol (SNMP), a Customer Premise Equipment (CPE) WAN Management Protocol (TR069), OPENFLOW and the like.

The configuration server may determine the node for replicating the multicast data and update a multicast replication list according to identification information of the virtual residential gateway associated with or added in the multicast protocol.

The replication and forwarding of the multicast protocol data is separated from the replication and forwarding of the multicast data, and the multicast replication list is dynamically configured, which will help reduce requirements of the occupied bandwidth by the multicast data and may dynamically control the replication and forwarding of the multicast data.

The present invention further provides a computer storage medium, which is configured to store computer-executable instructions for executing the above method for data transmission.

### Implementation 1

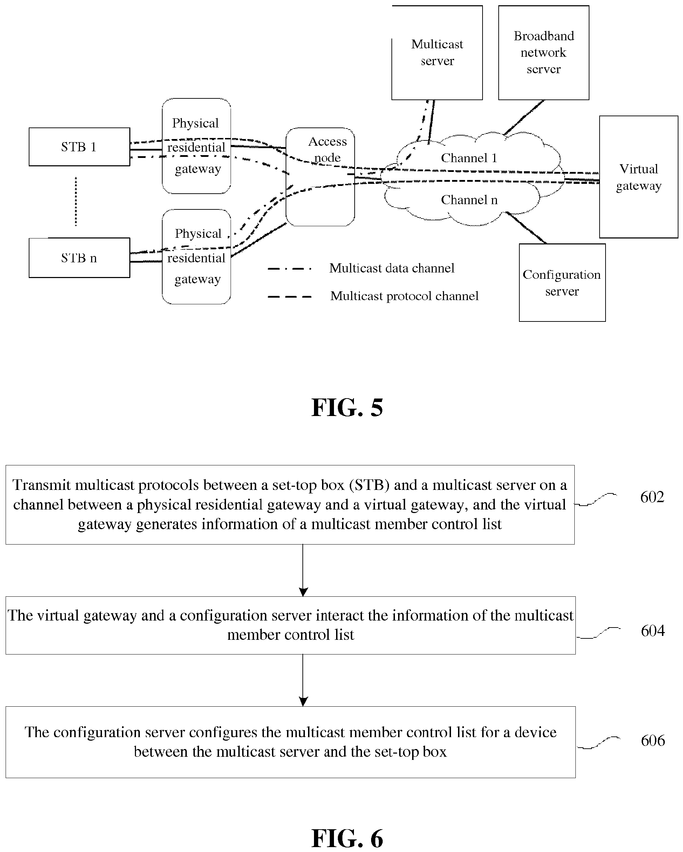

As shown in FIG. 5, a corresponding data bearing channel is established between a physical residential gateway and a virtual residential gateway (that is, a bearing channel (a second multicast protocol-bearable channel) is established between each physical residential gateway and the virtual residential gateway). The data bearing channel goes through a network node (including an access node) between the physical residential gateway and the virtual residential gateway to form a point-to-point channel, and a multicast protocol packet (corresponding to the above first multicast protocol data) sent from a device connected to the physical residential gateway is transmitted to the virtual residential gateway through the bearing channel.

A process for multicast data forwarding and configuration in the present invention may include the following steps: the virtual residential gateway transmits a multicast protocol (corresponding to the above second multicast protocol data) sent from a multicast server to a device (for example, a set-top box) connected to the physical residential gateway through the bearing channel (the second multicast protocol-bearable channel), and records a change of multicast member information; the virtual residential gateway transmits a multicast protocol message (corresponding to the above first multicast protocol data) received from the device connected to the physical residential gateway to the multicast server through a connected uplink interface and records the change of the multicast member information. Alternatively, the virtual residential gateway and a configuration server determines how to replicate multicast data according to a local multicast permission list (corresponding to the above multicast permission information) and an on-demand situation of a multicast program (corresponding to the above on-demand situation), thereby determining a multicast member control list of a corresponding network node. Taking the set-top box as an example, FIG. 6 is a flowchart 1 illustrating a process for multicast data forwarding and configuration according to the present invention. As shown in FIG. 6, the process includes the steps described below.

In step 602, the multicast protocols between the set-top box (STB) and the multicast server are transmitted on a channel between the physical residential gateway and a virtual residential gateway, and the virtual residential gateway generates information of the multicast member control list.

In step 604, an interaction between the virtual residential gateway and the configuration server includes the information of the multicast member control list. In step 606, the configuration server configures the multicast member control list for a device between the multicast server and the set-top box.

The virtual residential gateway may exchange related information to the multicast member control list with the configuration server. For example, if a set-top box 1 connected to one physical residential gateway applies to join a multicast group, the virtual residential gateway may determine a target device for multicast replication according to information of a multicast protocol channel (a channel 1 in FIG. 5) between the virtual residential gateway and the physical residential gateway. For example, according to the channel 1 which receives the multicast protocol, it may be determined that a port 1 corresponding to the access node (AN) is connected and it is further determined that the target device connected to the port 1 is the device connected to the one physical residential gateway. After the information is known, the virtual residential gateway transmits information including the multicast member control list to the configuration server (the information of the multicast member control list includes, for example, the physical residential gateway connected to the port 1 of an access node 1), and the configuration server determines a multicast data forwarding path according to positions of the multicast server and the physical residential gateway and generates a forwarding replication list of the multicast data of several devices between the multicast server and the physical residential gateway. In this way, the multicast data is replicated from the multicast server to the physical residential gateway and further replicated to the connected set-top box.

One access node may be connected to a plurality of physical residential gateways and a plurality of set-top boxes connected to the plurality of physical residential gateways. If the set-top box 1 is ready to request a multicast program and a set-top box n has already requested the program, the virtual residential gateway receives a request for the multicast program and transmits the request to the configuration server, and the configuration server may compare the forwarding replication list of the multicast program in the existing art (the list may be stored in the configuration server and used for recording a replication situation of all the multicast data), finds that the set-top box n has already requested the program, and then merely updates the multicast replication list of the access node. If all the physical residential gateways connected to the access node have not requested the program, the forwarding replication list of the multicast data of the devices connected to the access node needs to be updated.

The multicast data is replicated from the multicast server to the set-top boxes level by level to achieve effective replication of the multicast data. The multicast data forwarding path is constructed according to a reasonable bandwidth saving manner of a multicast data flow instead of being centrally replicated at the virtual residential gateway, thereby saving network bandwidth.

A multicast protocol bearing channel (corresponding to the above multicast protocol channel and the second multicast protocol-bearable channel) may be a two-layer channel based on an MAC layer or a three-layer channel based on an IP layer.

The multicast protocol bearing channel is different from the multicast data forwarding path. The multicast data is not carried in the multicast protocol bearing channel.

The configuration server may configure, with a control protocol, the configured multicast member control list for each device on the forwarding path. The control protocol may include any combination of SNMP, TR069, OPENFLOW and other protocols, and may include at least one of these protocols.

### Implementation 2

As shown in FIG. 5, a corresponding data bearing channel (a second multicast protocol-bearable channel) is established between a physical residential gateway and a virtual residential gateway. The data bearing channel goes through a network node between the physical residential gateway and the virtual residential gateway to form a point-to-point channel, and a multicast protocol packet sent from a device (such as a set-top box) connected to the physical residential gateway is transmitted to the virtual residential gateway through the bearing channel.

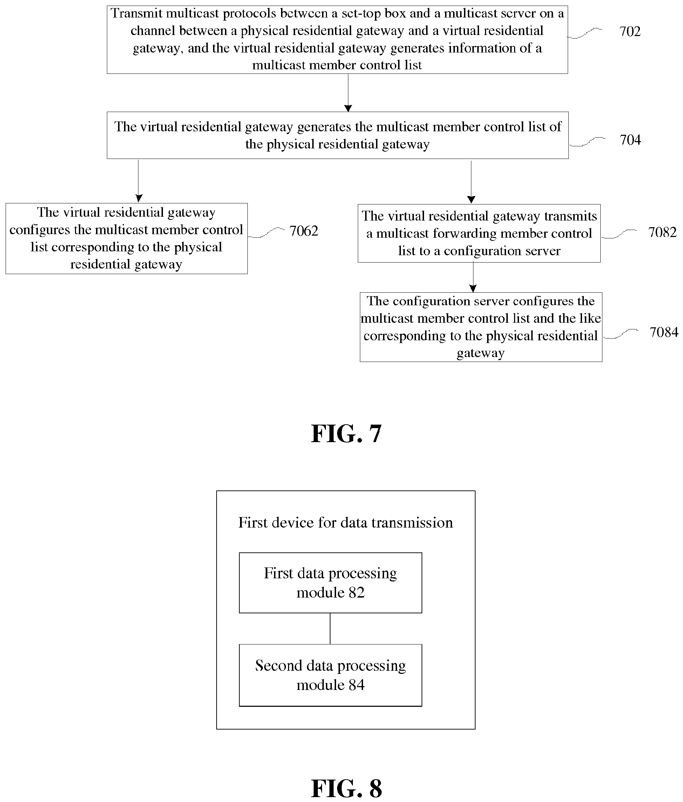

FIG. 7 is a flowchart 2 illustrating a process for multicast data forwarding and configuration according to the present invention. As shown in FIG. 7, the process includes the steps described below.

In step 702, multicast protocols between the set-top box and a multicast server are transmitted on a channel between the physical residential gateway and the virtual residential gateway, and the virtual residential gateway generates information of a multicast member control list.

In step 704, the virtual residential gateway generates the multicast member control list of the physical residential gateway, which may include that the virtual residential gateway implements an Internet Group Management Protocol (IGMP) snooping function and generates the multicast member control list of the physical residential gateway after receiving a multicast protocol message.

This list may be configured for the physical residential gateway in two manners. A first manner refers to step 7062 and a second manner refers to step 7082.

In step 7062, the virtual residential gateway configures the multicast member control list corresponding to the physical residential gateway.

In step 7082, the virtual residential gateway transmits a multicast forwarding member control list to the configuration server.

In step 7084, the configuration server configures the multicast member control list and the like corresponding to the physical residential gateway.

A network node between the multicast server and the set-top box other than the physical residential gateway has a capability of identifying the multicast protocol message such as an IGMP and generates multicast replication list information of the node. The multicast member control list is obtained to complete the replication of the multicast data. Because the physical residential gateway does not identify the multicast protocol packet, the multicast replication and control on the physical residential gateway is implemented through external control or configuration, as shown in FIG. 7.

The virtual residential gateway may exchange information related to the multicast member control list with the configuration server. For example, if a set-top box connected to one physical residential gateway applies to join a multicast group, the virtual residential gateway determines forwarding and replication of the multicast data according to an interface of the one physical residential gateway joining the multicast group.

The multicast data is replicated from the multicast server to the set-top box level by level to achieve effective replication of the multicast data. The multicast data forwarding path is constructed according to a reasonable bandwidth saving manner of a multicast data flow instead of being centrally replicated at the virtual residential gateway, thereby saving network bandwidth.

A multicast protocol bearing channel (the second multicast protocol-bearable channel) may include a two-layer channel based on an MAC layer or a three-layer channel based on an IP layer.

The multicast protocol bearing channel (the second multicast protocol-bearable channel) is different from the multicast data forwarding path. The multicast data is not carried in the multicast protocol bearing channel.

The configuration server may configure, with a control protocol, the configured multicast member control list for the physical residential gateway. The control protocol includes any combination of SNMP, TR069, OPENFLOW and other protocols, and may include at least one of these protocols.

From the description of the implementation modes described above, it will be apparent to those skilled in the art that the methods described above may be implemented by software plus a necessary general-purpose hardware platform, or may of course be implemented by hardware, but in many cases, the former is a preferred implementation mode. Based on this understanding, the solutions provided by the present invention substantially, or the part contributing to the existing art, may be embodied in the form of a software product. The computer software product is stored in a storage medium (such as a ROM/RAM, a magnetic disk or an optical disk) and includes several instructions for enabling a terminal device (which may be a mobile phone, a computer, a server, a network device or the like) to execute the methods according to the present invention.

The present invention further provides a device for data transmission. The device is used for implementing the above-mentioned implementations. What has been described will not be repeated. As used below, the term "module" may be software, hardware or a combination thereof capable of implementing predetermined functions. The device described below may be implemented by software, but implementation by hardware or by a combination of software and hardware is also possible and conceived.

FIG. 8 is a block diagram of a first device for data transmission according to the present invention. As shown in FIG. 8, the device includes a first data processing module 82 and a second data processing module 84. The first data processing module 82 and the second data processing module 84 are described below.

The first data processing module 82 is configured to transmit first multicast protocol data sent from a terminal to a multicast server, and/or receive second multicast protocol data from the multicast server and transmit the second multicast protocol data to the terminal using a first multicast protocol-bearable channel pre-established with a virtual residential gateway.

The second data processing module 84 is configured to receive multicast data from the multicast server and transmit the multicast data to the terminal using a first multicast data channel pre-established with the multicast server.

The first multicast protocol-bearable channel and the first multicast data channel are independent of each other.

In an implementation, the first data processing module 82 and the second data processing module 84 may receive the multicast data from the multicast server using the multicast data channel established with the multicast server by receiving the multicast data from an access node using the multicast data channel established with the multicast server. The multicast data from the access node is the multicast data sent from the multicast server and forwarded by the access node according to a first multicast control list. The multicast data channel connects a physical residential gateway and the multicast server through the access node.

In an implementation, the second data processing module 84 is configured to transmit the multicast data to the terminal by determining a configured second multicast control list and transmitting the multicast data to the terminal according to the second multicast control list.

In an implementation, the second multicast control list includes: the second multicast control list configured by a configuration server according to multicast permission information and an on-demand situation; the second multicast control list configured by the virtual residential gateway according to the multicast permission information and the on-demand situation; and the second multicast control list which is determined by the virtual residential gateway according to the multicast permission information and the on-demand situation and transmitted to the configuration server and then is configured by the configuration server. The multicast permission information is set to indicate an on-demand permission for a multicast program of at least two terminals, and the on-demand situation is set to indicate an on-demand situation of the multicast program of the at least two terminals.

In an implementation, the second data processing module 84 is configured to transmit the multicast data to the terminal according to the second multicast control list by replicating the multicast data according to the second multicast control list and transmitting the replicated multicast data to the terminal.

In an implementation, the device further includes a first update module, which is configured to update the second multicast control list according to a first update instruction from the virtual residential gateway and/or the configuration server.

In an implementation, the multicast protocol-bearable channel includes a two-layer channel based on a media access control (MAC) layer, a three-layer channel based on an Internet IP layer and a combination thereof, and may include at least one of the two-layer channel based on the MAC layer and the three-layer channel based on the Internet IP layer.

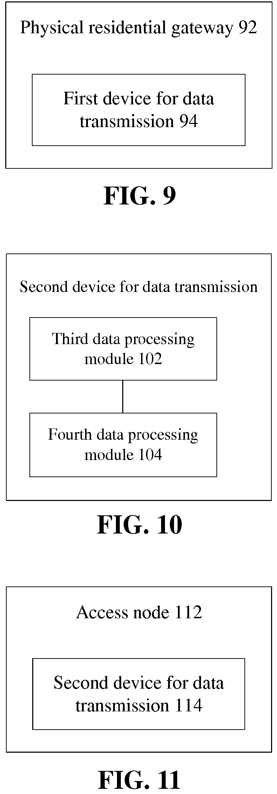

FIG. 9 is a block diagram of a physical residential gateway according to the present invention. As shown in FIG. 9, a physical residential gateway 92 includes the above first device for data transmission 94.

FIG. 10 is a block diagram of a second device for data transmission according to the present invention. As shown in FIG. 10, the device includes a third data processing module 102 and a fourth data processing module 104. The third data processing module 102 and the fourth data processing module 104 are described below.

The third data processing module 102 is configured to transmit third multicast protocol data sent from a physical residential gateway to a multicast server, and/or receive fourth multicast protocol data from the multicast server and transmit the fourth multicast protocol data to the physical residential gateway using a second multicast protocol-bearable channel pre-established between the physical residential gateway and a virtual residential gateway.

The fourth data processing module is configured to receive multicast data from the multicast server and transmit the multicast data to the physical residential gateway using a second multicast data channel pre-established between the physical residential gateway and the multicast server.

The second multicast protocol-bearable channel and the second multicast data channel are independent of each other.

In an implementation, the fourth data processing module 104 is configured to transmit the multicast data to the physical residential gateway by determining a configured first multicast control list and transmitting the multicast data to the physical residential gateway according to the first multicast control list.

In an implementation, the first multicast control list includes: the first multicast control list configured by a configuration server according to a network connection situation between the multicast server and the physical residential gateway; the first multicast control list configured by the virtual residential gateway according to the network connection situation between the multicast server and the physical residential gateway; and the first multicast control list which is determined by the virtual residential gateway according to the network connection situation between the multicast server and the physical residential gateway and transmitted to the configuration server and then is configured by the configuration server.

In an implementation, the fourth data processing module 104 may transmit the multicast data to the physical residential gateway according to the first multicast control list by replicating the multicast data according to the first multicast control list and transmitting the replicated multicast data to the physical residential gateway. In an implementation, the device further includes a second update module, which is configured to update the first multicast control list according to a second update instruction from the virtual residential gateway and/or the configuration server.

In an implementation, the multicast protocol-bearable channel may include a two-layer channel based on a media access control (MAC) layer, a three-layer channel based on an Internet IP layer and a combination thereof, and for example, includes at least one of the two-layer channel based on the MAC layer and the three-layer channel based on the Internet IP layer.

FIG. 11 is a block diagram of an access node according to the present invention. As shown in FIG. 11, an access node 112 includes the above second device for data transmission 114.

In an implementation, a system for data transmission is further provided. The system includes the above physical residential gateway 92, the above access node 112, a virtual residential gateway, a multicast server and a configuration server. The virtual residential gateway is configured to execute an operation including any combination of: receiving first multicast protocol data from the physical residential gateway and transmitting the first multicast protocol data to the multicast server; receiving second multicast protocol data from the multicast server and transmitting the second multicast protocol data to the physical residential gateway; configuring a second multicast control list for the physical residential gateway according to multicast permission information and an on-demand situation, where the multicast permission information is set to indicate an on-demand permission for a multicast program of at least two terminals, and the on-demand situation is set to indicate an on-demand situation of the multicast program of the at least two terminals; determining the second multicast control list according to the multicast permission information and the on-demand situation and configuring the second multicast control list for the physical residential gateway by mean of the configuration server, where the multicast permission information is set to indicate the on-demand permission for the multicast program of the at least two terminals; transmitting a first update instruction to the physical residential gateway when it is determined that the second multicast control list in the physical residential gateway needs to be updated, where the first update instruction is set to instruct the physical residential gateway to update the second multicast control list; configuring a first multicast control list for the access node according to a network connection situation between the multicast server and the physical residential gateway; configuring the first multicast control list for the access node by means of the configuration server; and transmitting a second update instruction to the access node when it is determined that the first multicast control list in the access node needs to be updated, where the second update instruction is set to instruct the access node to update the first multicast control list. The present invention may include at least one of the above operations.

The multicast server is configured to execute an operation including any combination of: receiving the first multicast protocol data from a terminal connected to the physical residential gateway; transmitting the second multicast protocol data to the terminal connected to the physical residential gateway; and transmitting multicast data to the terminal connected to the physical residential gateway. The present invention may include at least one of the above operations.

The configuration server is configured to execute an operation including any combination of: configuring the second multicast control list for the physical residential gateway according to the multicast permission information and the on-demand situation, where the multicast permission information is set to indicate the on-demand permission for the multicast program of the at least two terminals, and the on-demand situation is set to indicate the on-demand situation of the multicast program of the at least two terminals; receiving the second multicast control list from the virtual residential gateway and configuring the second multicast control list for the physical residential gateway; transmitting the first update instruction to the physical residential gateway when it is determined that the second multicast control list in the physical residential gateway needs to be updated, where the first update instruction is set to instruct the physical residential gateway to update the second multicast control list; configuring the first multicast control list for the access node according to the network connection situation between the multicast server and the physical residential gateway; receiving the first multicast control list from the virtual residential gateway and configuring the first multicast control list for the access node; and transmitting the second update instruction to the access node when it is determined that the first multicast control list in the access node needs to be updated, where the second update instruction is set to instruct the access node to update the first multicast control list. The present invention may include at least one of the above operations.

It is to be noted that the various modules described above may be implemented by software or hardware. Implementation by hardware may, but may not necessarily, be performed in the following manners: the various modules described above are located in a same processor or their respective processors.

The present invention further provides a storage medium. Optionally, the storage medium may be configured to store program codes for executing the steps described above.

Optionally, the storage medium may include, but is not limited to, a U disk, a read-only memory (ROM), a random access memory (RAM), a mobile hard disk, a magnetic disk, an optical disk or another medium capable of storing program codes. Optionally, a processor executes the steps described above according to the program codes stored in the storage medium.

Optionally, for examples, reference may be made to the examples described above, and the examples will not be repeated here.

It is understandable by those skilled in the art that all or some steps in the methods described above may be implemented by relevant hardware (such as a processor) as instructed by programs, and the programs may be stored in a computer-readable storage medium, such as a read-only memory, a magnetic disk and an optical disk. Optionally, all or some steps described above may also be implemented by using one or more integrated circuits. Accordingly, each module/unit described above may be implemented by hardware, for example, the functions of these modules/units may be implemented by integrated circuits; or may be implemented by software function modules, for example, the functions of these modules/units may be implemented by using a processor to execute programs/instructions stored in a storage medium. The present invention is not limited to any specific combination of hardware and software.

Although the implementation modes disclosed by the present application are as described above, the content thereof is merely for facilitating the understanding of the present application and is not intended to limit the present application. Example of the implementation modes are the specific implementation methods of the present invention.

### INDUSTRIAL APPLICABILITY

The technical solutions in the present invention reduce the bandwidth pressure of the network.

## Claims

1. A method for data transmission, applied in a physical residential gateway, comprising:
transmitting (302) first multicast protocol data sent from a terminal to a virtual residential gateway using a multicast protocol-bearable channel pre-established between the physical residential gateway and the virtual residential gateway so that the first multicast protocol data is sent from the virtual residential gateway to a multicast server through a connected uplink interface, and/or receiving from the virtual residential gateway, second multicast protocol data sent from the multicast server and transmitting the second multicast protocol data to the terminal using the multicast protocol-bearable channel pre-established between the physical residential gateway and the virtual residential gateway; and
receiving (304) multicast data from the multicast server and transmitting the multicast data to the terminal using a multicast data channel pre-established between the physical residential gateway and the multicast server; wherein the multicast protocol-bearable channel which is used to bear both the first multicast protocol data and the second multicast protocol data between the multicast server and the physical residential gateway and the multicast data channel which is used to carry the multicast data from the multicast server to the physical residential gateway are independent of each other, and wherein receiving the multicast data from the multicast server using the multicast data channel pre-established between the physical residential gateway and the multicast server comprises:
receiving, using the pre-established multicast data channel, the multicast data sent from the multicast server and forwarded by an access node according to a first multicast control list, and **characterised by**:
the multicast data channel connects the physical residential gateway and the multicast server through the access node without passing through the virtual residential gateway.

2. The method of claim 1, wherein transmitting the multicast data to the terminal comprises:
determining a configured second multicast control list; and
transmitting the multicast data to the terminal according to the second multicast control list.

3. The method of claim 2, wherein the second multicast control list comprises at least one of:
the second multicast control list configured by a configuration server according to multicast permission information and an on-demand situation;
the second multicast control list configured by the virtual residential gateway according to the multicast permission information and the on-demand situation; and
the second multicast control list which is determined by the virtual residential gateway according to the multicast permission information and the on-demand situation and transmitted to the configuration server and then is configured by the configuration server;
wherein the multicast permission information is set to indicate an on-demand permission for a multicast program of at least two terminals, and the on-demand situation is set to indicate an on-demand situation of the multicast program of the at least two terminals.

4. The method of claim 2, wherein transmitting the multicast data to the terminal according to the second multicast control list comprises:
replicating the multicast data according to the second multicast control list; and
transmitting the replicated multicast data to the terminal.

5. The method of claim 2, further comprising:
updating the second multicast control list according to a first update instruction from the virtual residential gateway and/or a configuration server.

6. The method of any one of claims 1 to 5, wherein the multicast protocol-bearable channel comprises at least one of:
a two-layer channel based on a media access control (MAC) layer and a three-layer channel based on an interconnection protocol (IP) layer between Internet networks.

7. A method for data transmission, applied in an access node, comprising:
transmitting (402) third multicast protocol data sent from a physical residential gateway to a virtual residential gateway using a multicast protocol-bearable channel pre-established between the physical residential gateway and the virtual residential gateway so that the first multicast protocol data is sent from the virtual residential gateway to a multicast server through a connected uplink interface, and/or receiving from the virtual residential gateway, fourth multicast protocol data sent from the multicast server and transmitting the fourth multicast protocol data to the physical residential gateway using the multicast protocol-bearable channel pre-established between the physical residential gateway and the virtual residential gateway; and
receiving (404) multicast data from the multicast server and transmitting the multicast data to the physical residential gateway using a multicast data channel pre-established between the physical residential gateway and the multicast server; wherein the multicast protocol-bearable channel which is used to bear both the third multicast protocol data and the fourth multicast protocol data between the multicast server and the physical residential gateway and the multicast data channel which is used to carry the multicast data from the multicast server to the physical residential gateway are independent of each other, **characterised by**:
the multicast data channel connects the physical residential gateway and the multicast server through the access node without passing through the virtual residential gateway, and wherein transmitting the multicast data to the physical residential gateway comprises:
determining a configured first multicast control list; and
transmitting the multicast data to the physical residential gateway according to the first multicast control list.

8. The method of claim 7, wherein the first multicast control list comprises at least one of:
the first multicast control list configured by a configuration server according to a network connection situation between the multicast server and the physical residential gateway;
the first multicast control list configured by the virtual residential gateway according to the network connection situation between the multicast server and the physical residential gateway; and
the first multicast control list which is determined by the virtual residential gateway according to the network connection situation between the multicast server and the physical residential gateway and transmitted to the configuration server and then is configured by the configuration server.

9. The method of claim 7, wherein transmitting the multicast data to the physical residential gateway according to the first multicast control list comprises:
replicating the multicast data according to the first multicast control list; and
transmitting the replicated multicast data to the physical residential gateway.

10. The method of claim 7, further comprising:
updating the first multicast control list according to a second update instruction from the virtual residential gateway and/or a configuration server.

11. The method of any one of claims 7 to 10, wherein the multicast protocol-bearable channel comprises at least one of:
a two-layer channel based on a media access control (MAC) layer and a three-layer channel based on an Internet IP layer.

12. A device for data transmission, applied in a physical residential gateway, comprising:
a first data processing module (82), which is configured to transmit first multicast protocol data sent from a terminal to a virtual residential gateway using a multicast protocol-bearable channel pre-established between the physical residential gateway and the virtual residential gateway so that the first multicast protocol data is sent from the virtual residential gateway to a multicast server through a connected uplink interface, and/or receive from the virtual residential gateway, second multicast protocol data sent from the multicast server and transmit the second multicast protocol data to the terminal using the multicast protocol-bearable channel pre-established between the physical residential gateway and the virtual residential gateway; and
a second data processing module (84), which is configured to receive multicast data from the multicast server and transmit the multicast data to the terminal using a multicast data channel pre-established between the physical residential gateway and the multicast server;
wherein the multicast protocol-bearable channel which is used to bear both the first multicast protocol data and the second multicast protocol data between the multicast server and the physical residential gateway and the multicast data channel which is used to carry the multicast data from the multicast server to the physical residential gateway are independent of each other, and
wherein the second data processing module (84) is configured to receive, using the pre-established multicast data channel, the multicast data sent from the multicast server and forwarded by an access node according to a first multicast control list, so as to receive the multicast data from the multicast server, and **characterised by**: the multicast data channel connects the physical residential gateway and the multicast server through the access node without passing through the virtual residential gateway.

13. A device for data transmission, applied in an access node, comprising:
a third data processing module (102), which is configured to transmit third multicast protocol data sent from a physical residential gateway to a virtual residential gateway using a multicast protocol-bearable channel pre-established between the physical residential gateway and the virtual residential gateway so that the first multicast protocol data is sent from the virtual residential gateway to a multicast server through a connected uplink interface, and/or receive from the virtual residential gateway, fourth multicast protocol data sent from the multicast server and transmit the fourth multicast protocol data to the physical residential gateway using the multicast protocol-bearable channel pre-established between the physical residential gateway and the virtual residential gateway; and
a fourth data processing module (104), which is configured to receive multicast data from the multicast server and transmit the multicast data to the physical residential gateway using a multicast data channel pre-established between the physical residential gateway and the multicast server; wherein the multicast protocol-bearable channel which is used to bear both the third multicast protocol data and the fourth multicast protocol data between the multicast server and the physical residential gateway and the multicast data channel which is used to carry the multicast data from the multicast server to the physical residential gateway are independent of each other, **characterised by**:
the multicast data channel connects the physical residential gateway and the multicast server through the access node without passing through the virtual residential gateway, and
wherein the fourth data processing module (104) is configured to determine a configured first multicast control list and transmit the multicast data to the physical residential gateway according to the first multicast control list, so as to transmit the multicast data to the physical residential gateway using the multicast data channel pre-established between the physical residential gateway and the multicast server.

## Patentansprüche

1. Verfahren zur Datenübertragung, das in einem physischen Heimgateway angewendet wird, umfassend:
Übertragen (302) von ersten Multicast-Protokolldaten, die von einem Endgerät an ein virtuelles Heimgateway gesendet werden, unter Verwenden eines Multicast-Protokollträgerkanals, der zwischen dem physischen Heimgateway und dem virtuellen Heimgateway vorab eingerichtet ist, so dass die ersten Multicast-Protokolldaten von dem virtuellen Heimgateway an einen Multicast-Server über eine verbundene Uplink-Schnittstelle gesendet werden, und/oder Empfangen von zweiten Multicast-Protokolldaten, die von dem Multicast-Server gesendet werden, von dem virtuellen Heimgateway und Übertragen der zweiten Multicast-Protokolldaten an das Endgerät unter Verwenden des Multicast-Protokollträgerkanals, der zwischen dem physischen Heimgateway und dem virtuellen Heimgateway vorab eingerichtet ist; und
Empfangen (304) von Multicast-Daten von dem Multicast-Server und Übertragen der Multicast-Daten an das Endgerät unter Verwenden eines Multicast-Datenkanals, der zwischen dem physischen Heimgateway und dem Multicast-Server vorab eingerichtet ist;
wobei der Multicast-Protokollträgerkanal, der verwendet wird, um sowohl die ersten Multicast-Protokolldaten als auch die zweiten Multicast-Protokolldaten zwischen dem Multicast-Server und dem physischen Heimgateway zu tragen, und der Multicast-Datenkanal, der verwendet wird, um die Multicast-Daten von dem Multicast-Server an das physische Heimgateway zu tragen, voneinander unabhängig sind, und
wobei das Empfangen der Multicast-Daten von dem Multicast-Server unter Verwenden des Multicast-Datenkanals, der zwischen dem physischen Heimgateway und dem Multicast-Server vorab eingerichtet ist, umfasst:
Empfangen, unter Verwenden des vorab eingerichteten Multicast-Datenkanals, der Multicast-Daten, die von dem Multicast-Server gesendet und durch einen Zugriffsknoten gemäß einer ersten Multicast-Steuerungsliste weitergeleitet werden, und **gekennzeichnet durch**: der Multicast-Datenkanal verbindet den physischen Heimgateway und den Multicast-Server über den Zugriffsknoten, ohne das virtuelle Heimgateway zu durchlaufen.

2. Verfahren nach Anspruch 1, wobei das Übertragen der Multicast-Daten an das Endgerät umfasst:
Bestimmen einer konfigurierten zweiten Multicast-Steuerungsliste; und
Übertragen der Multicast-Daten an das Endgerät gemäß der zweiten Multicast-Steuerungsliste.

3. Verfahren nach Anspruch 2, wobei die zweite Multicast-Steuerungsliste mindestens eines umfasst von:
der zweiten Multicast-Steuerungsliste, die durch einen Konfigurationsserver gemäß Multicast-Berechtigungsinformationen und einer Bedarfssituation konfiguriert wird;
der zweiten Multicast-Steuerungsliste, die durch das virtuelle Heimgateway gemäß den Multicast-Berechtigungsinformationen und der Bedarfssituation konfiguriert wird; und
der zweiten Multicast-Steuerungsliste, die durch das virtuelle Heimgateway gemäß den Multicast-Berechtigungsinformationen und der Bedarfssituation bestimmt wird und an den Konfigurationsserver übertragen wird und dann durch den Konfigurationsserver konfiguriert wird;
wobei die Multicast-Berechtigungsinformationen eingestellt werden, um eine Bedarfsberechtigung für ein Multicast-Programm von mindestens zwei Endgeräten anzugeben, und die Bedarfssituation eingestellt wird, um eine Bedarfssituation des Multicast-Programms der mindestens zwei Endgeräte anzugeben.

4. Verfahren nach Anspruch 2, wobei das Übertragen der Multicast-Daten an das Endgerät gemäß der zweiten Multicast-Steuerungsliste umfasst:
Nachbilden der Multicast-Daten gemäß der zweiten Multicast-Steuerungsliste; und
Übertragen der nachgebildeten Multicast-Daten an das Endgerät.

5. Verfahren nach Anspruch 2, ferner umfassend:
Aktualisieren der zweiten Multicast-Steuerungsliste gemäß einer ersten Aktualisierungsanweisung von dem virtuellen Heimgateway und/oder einem Konfigurationsserver.

6. Verfahren nach einem der Ansprüche 1 bis 5, wobei der Multicast-Protokollträgerkanal mindestens eines umfasst von:
einem Zwei-Schicht-Kanal, der auf einer Medienzugriffssteuerungsschicht (MAC-Schicht) basiert, und einem Drei-Schicht-Kanal, der auf einer Verbindungsprotokollschicht (IP-Schicht) zwischen Internetnetzwerken basiert.

7. Verfahren zur Datenübertragung, das in einem Zugriffsknoten angewendet wird, umfassend:
Übertragen (402) von dritten Multicast-Protokolldaten, die von einem physischen Heimgateway an ein virtuelles Heimgateway gesendet werden, unter Verwenden eines Multicast-Protokollträgerkanals, der zwischen dem physischen Heimgateway und dem virtuellen Heimgateway vorab eingerichtet ist, so dass die ersten Multicast-Protokolldaten von dem virtuellen Heimgateway an einen Multicast-Server über eine verbundene Uplink-Schnittstelle gesendet werden, und/oder Empfangen von vierten Multicast-Protokolldaten, die von dem Multicast-Server gesendet werden, von dem virtuellen Heimgateway und Übertragen der vierten Multicast-Protokolldaten an das physische Heimgateway unter Verwenden des Multicast-Protokollträgerkanals, der zwischen dem physischen Heimgateway und dem virtuellen Heimgateway vorab eingerichtet ist; und
Empfangen (404) von Multicast-Daten von dem Multicast-Server und Übertragen der Multicast-Daten an das physische Heimgateway unter Verwenden eines Multicast-Datenkanals, der zwischen dem physischen Heimgateway und dem Multicast-Server vorab eingerichtet ist;
wobei der Multicast-Protokollträgerkanal, der verwendet wird, um sowohl die dritten Multicast-Protokolldaten als auch die vierten Multicast-Protokolldaten zwischen dem Multicast-Server und dem physischen Heimgateway zu tragen, und der Multicast-Datenkanal, der verwendet wird, um die Multicast-Daten von dem Multicast-Server an das physische Heimgateway zu tragen, voneinander unabhängig sind, **gekennzeichnet durch**: der Multicast-Datenkanal verbindet den physischen Heimgateway und den Multicast-Server über den Zugriffsknoten, ohne das virtuelle Heimgateway zu durchlaufen, und
wobei das Übertragen der Multicast-Daten an das physische Heimgateway umfasst:
Bestimmen einer konfigurierten ersten Multicast-Steuerungsliste; und
Übertragen der Multicast-Daten an das physische Heimgateway gemäß der ersten Multicast-Steuerungsliste.

8. Verfahren nach Anspruch 7, wobei die erste Multicast-Steuerungsliste mindestens eines umfasst von:
der ersten Multicast-Steuerungsliste, die durch einen Konfigurationsserver gemäß einer Netzwerkverbindungssituation zwischen dem Multicast-Server und dem physischen Heimgateway konfiguriert wird;
der ersten Multicast-Steuerungsliste, die durch das virtuelle Heimgateway gemäß der Netzwerkverbindungssituation zwischen dem Multicast-Server und dem physischen Heimgateway konfiguriert wird; und
der ersten Multicast-Steuerungsliste, die durch das virtuelle Heimgateway gemäß der Netzwerkverbindungssituation zwischen dem Multicast-Server und dem physischen Heimgateway bestimmt wird und an den Konfigurationsserver übertragen wird und dann durch den Konfigurationsserver konfiguriert wird.

9. Verfahren nach Anspruch 7, wobei das Übertragen der Multicast-Daten an das physische Heimgateway gemäß der ersten Multicast-Steuerungsliste umfasst:
Nachbilden der Multicast-Daten gemäß der ersten Multicast-Steuerungsliste; und
Übertragen der nachgebildeten Multicast-Daten an das physische Heimgateway.

10. Verfahren nach Anspruch 7, ferner umfassend:
Aktualisieren der ersten Multicast-Steuerungsliste gemäß einer zweiten Aktualisierungsanweisung von dem virtuellen Heimgateway und/oder einem Konfigurationsserver.

11. Verfahren nach einem der Ansprüche 7 bis 10, wobei der Multicast-Protokollträgerkanal mindestens eines umfasst von:
einem Zwei-Schicht-Kanal, der auf einer Medienzugriffssteuerungsschicht (MAC-Schicht) basiert, und einem Drei-Schicht-Kanal, der auf einer Internet-IP-Schicht basiert.

12. Vorrichtung zur Datenübertragung, die in einem physischen Heimgateway angewendet wird, umfassend:
ein erstes Datenverarbeitungsmodul (82), das konfiguriert ist, um erste Multicast-Protokolldaten, die von einem Endgerät an ein virtuelles Heimgateway gesendet werden, unter Verwenden eines Multicast-Protokollträgerkanals, der zwischen dem physischen Heimgateway und dem virtuellen Heimgateway vorab eingerichtet ist, zu übertragen, so dass die ersten Multicast-Protokolldaten von dem virtuellen Heimgateway an einen Multicast-Server über eine verbundene Uplink-Schnittstelle gesendet werden, und/oder zweite Multicast-Protokolldaten, die von dem Multicast-Server gesendet werden, von dem virtuellen Heimgateway zu empfangen und die zweiten Multicast-Protokolldaten an das Endgerät unter Verwenden des Multicast-Protokollträgerkanals, der zwischen dem physischen Heimgateway und dem virtuellen Heimgateway vorab eingerichtet ist, zu übertragen; und
ein zweites Datenverarbeitungsmodul (84), das konfiguriert ist, um Multicast-Daten von dem Multicast-Server zu empfangen und die Multicast-Daten an das Endgerät unter Verwenden eines Multicast-Datenkanals, der zwischen dem physischen Heimgateway und dem Multicast-Server vorab eingerichtet ist, zu übertragen;
wobei der Multicast-Protokollträgerkanal, der verwendet wird, um sowohl die ersten Multicast-Protokolldaten als auch die zweiten Multicast-Protokolldaten zwischen dem Multicast-Server und dem physischen Heimgateway zu tragen, und der Multicast-Datenkanal, der verwendet wird, um die Multicast-Daten von dem Multicast-Server an das physische Heimgateway zu tragen, voneinander unabhängig sind, und
wobei das zweite Datenverarbeitungsmodul (84) konfiguriert ist, um, unter Verwenden des vorab eingerichteten Multicast-Datenkanals, die Multicast-Daten, die von dem Multicast-Server gesendet und durch einen Zugriffsknoten gemäß einer ersten Multicast-Steuerungsliste weitergeleitet werden, zu empfangen, um die Multicast-Daten von dem Multicast-Server zu empfangen, und **gekennzeichnet durch**: der Multicast-Datenkanal verbindet den physischen Heimgateway und den Multicast-Server über den Zugriffsknoten, ohne das virtuelle Heimgateway zu durchlaufen.

13. Vorrichtung zur Datenübertragung, die in einem Zugriffsknoten angewendet wird, umfassend:
ein drittes Datenverarbeitungsmodul (102), das konfiguriert ist, um dritte Multicast-Protokolldaten, die von einem physischen Heimgateway an ein virtuelles Heimgateway gesendet werden, unter Verwenden eines Multicast-Protokollträgerkanals, der zwischen dem physischen Heimgateway und dem virtuellen Heimgateway vorab eingerichtet ist, zu übertragen, so dass die ersten Multicast-Protokolldaten von dem virtuellen Heimgateway an einen Multicast-Server über eine verbundene Uplink-Schnittstelle gesendet werden, und/oder vierte Multicast-Protokolldaten, die von dem Multicast-Server gesendet werden, von dem virtuellen Heimgateway zu empfangen und die vierten Multicast-Protokolldaten an das physische Heimgateway unter Verwenden des Multicast-Protokollträgerkanals, der zwischen dem physischen Heimgateway und dem virtuellen Heimgateway vorab eingerichtet ist, zu übertragen; und
ein viertes Datenverarbeitungsmodul (104), das konfiguriert ist, um Multicast-Daten von dem Multicast-Server zu empfangen und die Multicast-Daten an das physische Heimgateway unter Verwenden eines Multicast-Datenkanals, der zwischen dem physischen Heimgateway und dem Multicast-Server vorab eingerichtet ist, zu übertragen;
wobei der Multicast-Protokollträgerkanal, der verwendet wird, um sowohl die dritten Multicast-Protokolldaten als auch die vierten Multicast-Protokolldaten zwischen dem Multicast-Server und dem physischen Heimgateway zu tragen, und der Multicast-Datenkanal, der verwendet wird, um die Multicast-Daten von dem Multicast-Server an das physische Heimgateway zu tragen, voneinander unabhängig sind, **gekennzeichnet durch**: der Multicast-Datenkanal verbindet den physischen Heimgateway und den Multicast-Server über den Zugriffsknoten, ohne das virtuelle Heimgateway zu durchlaufen, und
wobei das vierte Datenverarbeitungsmodul (104) konfiguriert ist, um eine konfigurierte erste Multicast-Steuerungsliste zu bestimmen und die Multicast-Daten an das physische Heimgateway gemäß der ersten Multicast-Steuerungsliste zu übertragen, um die Multicast-Daten an das physische Heimgateway unter Verwenden des Multicast-Datenkanals, der zwischen dem physischen Heimgateway und dem Multicast-Server vorab eingerichtet ist, zu übertragen.

## Revendications

1. Procédé de transmission de données, appliqué dans une passerelle résidentielle physique, comprenant :
envoyer (302) des premières données de protocole de multidiffusion envoyées d'un terminal à une passerelle résidentielle virtuelle en utilisant un canal supportable de protocole de multidiffusion préétabli entre la passerelle résidentielle physique et la passerelle résidentielle virtuelle de sorte que les premières données de protocole de multidiffusion soient envoyées de la passerelle résidentielle virtuelle à un serveur de multidiffusion par l'intermédiaire d'une interface de liaison montante connectée, et/ou recevoir de la passerelle résidentielle virtuelle des secondes données de protocole de multidiffusion envoyées du serveur de multidiffusion et envoyer les secondes données de protocole de multidiffusion au terminal en utilisant le canal supportable de protocole de multidiffusion préétabli entre la passerelle résidentielle physique et la passerelle résidentielle virtuelle ; et
recevoir (304) des données de multidiffusion du serveur de multidiffusion et envoyer les données de multidiffusion au terminal en utilisant un canal de données de multidiffusion préétabli entre la passerelle résidentielle physique et le serveur de multidiffusion ;
dans lequel le canal supportable de protocole de multidiffusion qui est utilisé pour supporter à la fois les premières données de protocole de multidiffusion et les secondes données de protocole de multidiffusion entre le serveur de multidiffusion et la passerelle résidentielle physique et le canal de données de multidiffusion qui est utilisé pour transporter les données de multidiffusion du serveur de multidiffusion à la passerelle résidentielle physique sont indépendants l'un de l'autre, et
dans lequel recevoir les données de multidiffusion du serveur de multidiffusion en utilisant le canal de données de multidiffusion préétabli entre la passerelle résidentielle physique et le serveur de multidiffusion comprend :
recevoir, en utilisant le canal de données de multidiffusion préétabli, les données de multidiffusion envoyées du serveur de multidiffusion et transférées par un noeud d'accès selon une première liste de contrôle de multidiffusion, et **caractérisé en ce que** : le canal de données de multidiffusion connecte la passerelle résidentielle physique et le serveur de multidiffusion par l'intermédiaire du noeud d'accès sans passer par la passerelle résidentielle virtuelle.

2. Procédé selon la revendication 1, dans lequel envoyer les données de multidiffusion au terminal comprend :
déterminer une seconde liste de contrôle de multidiffusion configurée ; et
envoyer les données de multidiffusion au terminal selon la seconde liste de contrôle de multidiffusion.

3. Procédé selon la revendication 2, dans lequel la seconde liste de contrôle de multidiffusion comprend au moins l'un parmi :
la seconde liste de contrôle de multidiffusion configurée par un serveur de configuration selon des informations de permission de multidiffusion et une situation à la demande ;
la seconde liste de contrôle de multidiffusion configurée par la passerelle résidentielle virtuelle selon les informations de permission de multidiffusion et la situation à la demande ; et
la seconde liste de contrôle de multidiffusion qui est déterminée par la passerelle résidentielle virtuelle selon les informations de permission de multidiffusion et la situation à la demande et envoyée au serveur de configuration puis est configurée par le serveur de configuration ;
dans lequel les informations de permission de multidiffusion sont définies pour indiquer une permission à la demande pour un programme de multidiffusion d'au moins deux terminaux, et la situation à la demande est définie pour indiquer une situation à la demande du programme de multidiffusion des au moins deux terminaux.

4. Procédé selon la revendication 2, dans lequel envoyer les données de multidiffusion au terminal selon la seconde liste de contrôle de multidiffusion comprend :
répliquer les données de multidiffusion selon la seconde liste de contrôle de multidiffusion ; et
envoyer les données de multidiffusion répliquées au terminal.

5. Procédé selon la revendication 2, comprenant en outre :
mettre à jour la seconde liste de contrôle de multidiffusion selon une première instruction de mise à jour de la passerelle résidentielle virtuelle et/ou d'un serveur de configuration.

6. Procédé selon l'une quelconque des revendications 1 à 5, dans lequel le canal supportable de protocole de multidiffusion comprend au moins l'un parmi :
un canal à deux couches basé sur une couche de contrôle d'accès aux médias (couche MAC) et un canal à trois couches basé sur une couche de protocole d'interconnexion (couche IP) entre des réseaux d'Internet.

7. Procédé de transmission de données, appliqué dans un noeud d'accès, comprenant :
envoyer (402) des troisièmes données de protocole de multidiffusion envoyées d'une passerelle résidentielle physique à une passerelle résidentielle virtuelle en utilisant un canal supportable de protocole de multidiffusion préétabli entre la passerelle résidentielle physique et la passerelle résidentielle virtuelle de sorte que les premières données de protocole de multidiffusion soient envoyées de la passerelle résidentielle virtuelle à un serveur de multidiffusion par l'intermédiaire d'une interface de liaison montante connectée, et/ou recevoir de la passerelle résidentielle virtuelle des quatrièmes données de protocole de multidiffusion envoyées du serveur de multidiffusion et envoyer les quatrièmes données de protocole de multidiffusion à la passerelle résidentielle physique en utilisant le canal supportable de protocole de multidiffusion préétabli entre la passerelle résidentielle physique et la passerelle résidentielle virtuelle ; et
recevoir (404) des données de multidiffusion du serveur de multidiffusion et envoyer les données de multidiffusion à la passerelle résidentielle physique en utilisant un canal de données de multidiffusion préétabli entre la passerelle résidentielle physique et le serveur de multidiffusion ;
dans lequel le canal supportable de protocole de multidiffusion qui est utilisé pour supporter à la fois les troisièmes données de protocole de multidiffusion et les quatrièmes données de protocole de multidiffusion entre le serveur de multidiffusion et la passerelle résidentielle physique et le canal de données de multidiffusion qui est utilisé pour transporter les données de multidiffusion du serveur de multidiffusion à la passerelle résidentielle physique sont indépendants l'un de l'autre, **caractérisé en ce que** : le canal de données de multidiffusion connecte la passerelle résidentielle physique et le serveur de multidiffusion par l'intermédiaire du noeud d'accès sans passer par la passerelle résidentielle virtuelle, et
dans lequel l'étape consistant à envoyer les données de multidiffusion à la passerelle résidentielle physique comprend :
déterminer une première liste de contrôle de multidiffusion configurée ; et
envoyer les données de multidiffusion à la passerelle résidentielle physique selon la première liste de contrôle de multidiffusion.

8. Procédé selon la revendication 7, dans lequel la première liste de contrôle de multidiffusion comprend au moins l'un parmi :
la première liste de contrôle de multidiffusion configurée par un serveur de configuration selon une situation de connexion de réseau entre le serveur de multidiffusion et la passerelle résidentielle physique ;
la première liste de contrôle de multidiffusion configurée par la passerelle résidentielle virtuelle selon la situation de connexion de réseau entre le serveur de multidiffusion et la passerelle résidentielle physique ; et
la première liste de contrôle de multidiffusion qui est déterminée par la passerelle résidentielle virtuelle selon la situation de connexion de réseau entre le serveur de multidiffusion et la passerelle résidentielle physique et envoyée au serveur de configuration puis est configurée par le serveur de configuration.

9. Procédé selon la revendication 7, dans lequel envoyer les données de multidiffusion à la passerelle résidentielle physique selon la première liste de contrôle de multidiffusion comprend :
répliquer les données de multidiffusion selon la première liste de contrôle de multidiffusion ; et
envoyer les données de multidiffusion répliquées à la passerelle résidentielle physique.

10. Procédé selon la revendication 7, comprenant en outre :
mettre à jour la première liste de contrôle de multidiffusion selon une seconde instruction de mise à jour de la passerelle résidentielle virtuelle et/ou d'un serveur de configuration.

11. Procédé selon l'une quelconque des revendications 7 à 10, dans lequel le canal supportable de protocole de multidiffusion comprend au moins l'un parmi :
un canal à deux couches basé sur une couche de contrôle d'accès aux médias (couche MAC) et un canal à trois couches basé sur une couche IP d'Internet.

12. Dispositif de transmission de données, appliqué dans une passerelle résidentielle physique, comprenant :
un premier module de traitement de données (82), qui est configuré pour envoyer des premières données de protocole de multidiffusion envoyées d'un terminal à une passerelle résidentielle virtuelle en utilisant un canal supportable de protocole de multidiffusion préétabli entre la passerelle résidentielle physique et la passerelle résidentielle virtuelle de sorte que les premières données de protocole de multidiffusion soient envoyées de la passerelle résidentielle virtuelle à un serveur de multidiffusion par l'intermédiaire d'une interface de liaison montante connectée, et/ou recevoir de la passerelle résidentielle virtuelle des secondes données de protocole de multidiffusion envoyées du serveur de multidiffusion et envoyer les secondes données de protocole de multidiffusion au terminal en utilisant le canal supportable de protocole de multidiffusion préétabli entre la passerelle résidentielle physique et la passerelle résidentielle virtuelle ; et
un second module de traitement de données (84), qui est configuré pour recevoir des données de multidiffusion du serveur de multidiffusion et envoyer les données de multidiffusion au terminal en utilisant un canal de données de multidiffusion préétabli entre la passerelle résidentielle physique et le serveur de multidiffusion ;
dans lequel le canal supportable de protocole de multidiffusion qui est utilisé pour supporter à la fois les premières données de protocole de multidiffusion et les secondes données de protocole de multidiffusion entre le serveur de multidiffusion et la passerelle résidentielle physique et le canal de données de multidiffusion qui est utilisé pour transporter les données de multidiffusion du serveur de multidiffusion à la passerelle résidentielle physique sont indépendants l'un de l'autre, et
dans lequel le second module de traitement de données (84) est configuré pour recevoir, en utilisant le canal de données de multidiffusion préétabli, les données de multidiffusion envoyées du serveur de multidiffusion et transférées par un noeud d'accès selon une première liste de contrôle de multidiffusion, de manière à recevoir les données de multidiffusion du serveur de multidiffusion, et **caractérisé en ce que** : le canal de données de multidiffusion connecte la passerelle résidentielle physique et le serveur de multidiffusion par l'intermédiaire du noeud d'accès sans passer par la passerelle résidentielle virtuelle.

13. Dispositif de transmission de données, appliqué dans un noeud d'accès, comprenant :
un troisième module de traitement de données (102), qui est configuré pour envoyer des troisièmes données de protocole de multidiffusion envoyées d'une passerelle résidentielle physique à une passerelle résidentielle virtuelle en utilisant un canal supportable de protocole de multidiffusion préétabli entre la passerelle résidentielle physique et la passerelle résidentielle virtuelle de sorte que les premières données de protocole de multidiffusion soient envoyées de la passerelle résidentielle virtuelle à un serveur de multidiffusion par l'intermédiaire d'une interface de liaison montante connectée, et/ou recevoir de la passerelle résidentielle virtuelle des quatrièmes données de protocole de multidiffusion envoyées du serveur de multidiffusion et envoyer les quatrièmes données de protocole de multidiffusion à la passerelle résidentielle physique en utilisant le canal supportable de protocole de multidiffusion préétabli entre la passerelle résidentielle physique et la passerelle résidentielle virtuelle ; et
un quatrième module de traitement de données (104), qui est configuré pour recevoir des données de multidiffusion du serveur de multidiffusion et envoyer les données de multidiffusion à la passerelle résidentielle physique en utilisant un canal de données de multidiffusion préétabli entre la passerelle résidentielle physique et le serveur de multidiffusion ;
dans lequel le canal supportable de protocole de multidiffusion qui est utilisé pour supporter à la fois les troisièmes données de protocole de multidiffusion et les quatrièmes données de protocole de multidiffusion entre le serveur de multidiffusion et la passerelle résidentielle physique et le canal de données de multidiffusion qui est utilisé pour transporter les données de multidiffusion du serveur de multidiffusion à la passerelle résidentielle physique sont indépendants l'un de l'autre, **caractérisé en ce que** : le canal de données de multidiffusion connecte la passerelle résidentielle physique et le serveur de multidiffusion par l'intermédiaire du noeud d'accès sans passer par la passerelle résidentielle virtuelle, et
dans lequel le quatrième module de traitement de données (104) est configuré pour déterminer une première liste de contrôle de multidiffusion configurée et envoyer les données de multidiffusion à la passerelle résidentielle physique selon la première liste de contrôle de multidiffusion, de manière à envoyer les données de multidiffusion à la passerelle résidentielle physique en utilisant le canal de données de multidiffusion préétabli entre la passerelle résidentielle physique et le serveur de multidiffusion.
